# EUROPÄISCHE PATENTANMELDUNG

(11) **EP 2 228 572 A1**
(43) Veröffentlichungstag der Anmeldung: **15.09.2010**
(21) Anmeldenummer: 10001924.9
(22) Anmeldetag: 25.02.2010
(51) Int. Cl.: F16K 1/226

(54) **Dichtungen für dreifach oder vierfach asymmetrisch aufgebaute Absperrklappen**

(30) Priorität: 11.03.2009 DE 102009012611
(71) Anmelder: müller co-ax ag, 74670 Forchtenberg (DE)
(72) Erfinder: Gaida, Gregor, 74676 Niedernhall (DE)

(57) **Zusammenfassung**

Dichtungen für dreifach oder vierfach asymmetrisch aufgebaute Absperrklappen.

Es wird die Dichtung zur steuerbaren Mediumsströmung in einer dreifach oder vierfach exzentrischen Absperrklappe angegeben. Sie ist **dadurch gekennzeichnet, daß** im Gegensatz zu Konstruktionen nach dem Stand der Technik, die Dichtung nicht als Lamelle ausgeführt wird, sondern eine Konstruktion angegeben wird, die die Verwendung sehr elastischer Dichtungen auch bei hohen Drücken erlaubt.

## Beschreibung

### Beschreibung

Zur Steuerung des Flusses eines Mediums, z.B. einer Flüssigkeit, oder eines Gases, durch eine Rohrleitung, kann z.B. eine dreifach exzentrisch aufgebaute Absperrklappe verwendet werden. Mit einer solchen Armatur kann die Durchflußmenge und/oder die Durchflußgeschwindigkeit gesteuert werden. Die Erfindung befaßt sich mit der Konstruktion einer solchen Absperrklappe.

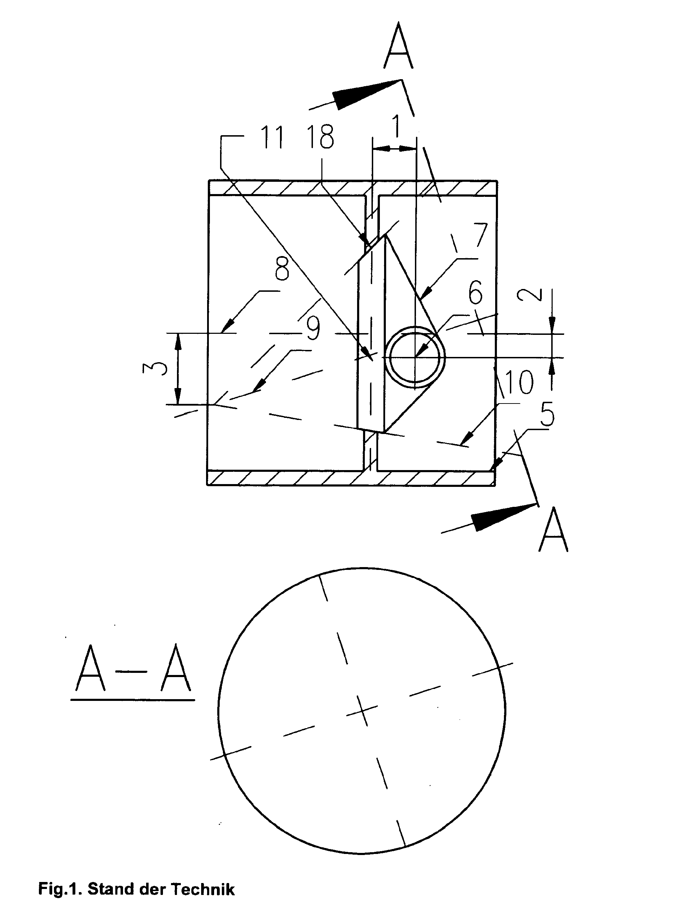

**Fig.1** Zeigt schematisch eine dreifach exzentrisch (dreifach asymmetrisch) aufgebaute Absperrklappe.
- Die Rotationsachse (Symmetrieachse **9)** der Dichtungsfläche **18** ist nicht identisch mit der Rohrleitungsachse **8.**
- Der Drehpunkt **6** der Klappenscheibe 7 ist aus der Mitte der Dichtungsfläche **18** entlang der Rohrleitungsachse **8** versetzt: Asymmetrie **1**
- Der Drehpunkt **6** der Klappenscheibe **7** ist aus der Mitte der Rohrleitungsachse **8** in Richtung einer der Rohrleitungswandungen versetzt: Asymmetrie **2.**
- Die Spitze des Körpers **10,** dessen Mantelfläche die Form der Dichtungsfläche **18** vorgibt, ist aus der Mitte der Rohrleitungsachse **8** um die Asymmetrie **3** versetzt.
- Bei einer vierfach exzentrisch aufgebauten Armatur ist der Körper **10** nicht rotationssymmetrisch, sondern besitzt senkrecht zur Symmetrieachse **9** geschnitten, einen z.B. elliptischen Querschnitt. Der Unterschied der Länge beiden Ellipsenachsen dieses Querschnittes ist die Asymmetrie **4.**

Diese Bauweise hat den Vorteil, dass je nach Positionierung der Lage des Mittelpunktes der Drehbewegung **6,** je nach Wahl der Asymmetrie **1,** je nach Wahl des Konuswinkels und dessen Asymmetrie **3,** eine reibungsfreie Betätigung der Armatur auch dann möglich ist, wenn die Asymmetrie **2** klein gewählt wird. Im Gegensatz zu einer doppelt exzentrisch aufgebauten Armatur kann hierbei also der Abstand des Mittelpunktes der Drehbewegung, von der Mitte der Rohrleitung klein gewählt werden und eine reibungsfreie Betätigung wird trotzdem erreicht.

Die Dichtungsfläche **18** stellt einen schrägen Ausschnitt eines Kegels dar. Die Dichtungsfläche **18** wird nach dem Stand der Technik auf konventionellen Drehbänken hergestellt. Hierbei wird der Körper der Armatur, bzw. die Dichtung schräg zur Drehbankachse eingespannt und anschließend bearbeitet. Hierbei greift das Bearbeitungswerkzeug bei jeder Drehbankumdrehung immer wieder in das Werkstück ein und wieder heraus (unterbrochener Schnitt).

Bei konventioneller Bearbeitung nach dem Stand der Technik ist es technisch nicht möglich in die Lamellendichtung **11** (oder die Dichtungsfläche **18)** eine Nut einzustechen, die z.B. einen O-Ring, bzw. eine kreisrunde Dichtung aufnehmen könnte, wie dies bei zweifach exzentrischen Armaturen praktiziert wird: Offenlegungsschrift DE 2440 698 A1.

Aus diesem Grund ist man nach dem Stand der Technik auf sog. Lamellendichtungen angewiesen, die meist in mehreren Schichten aufgebaut sind und sehr häufig eine Kombination aus den Werkstoffen: Edelstahl/Graphit oder Edelstahl/PTFE oder Edelstahl/Edelstahl bestehen.
Es ist ein großer Aufwand solche Dichtungen herzustellen: die Bauteile der einzelnen Schichten werden zunächst zurechtgeschnitten oder z.B. gestanzt. Anschließend werden die Schichten miteinander z.B. durch Kleben verbunden. Das gesamte Paket wird anschließend bearbeitet.

Die beiden Patentschriften: DE 29612183U1 DE 4104790A1 befassen sich mit der Herstellung solcher Dichtungen. Die aufwendige Herstellung solcher Lamellendichtungen **11** und der korrespondierenden Dichtungsflächen **18** sind die Hauptgründe, warum es so schwierig und aufwendig ist, dreifach exzentrische Klappen herzustellen.

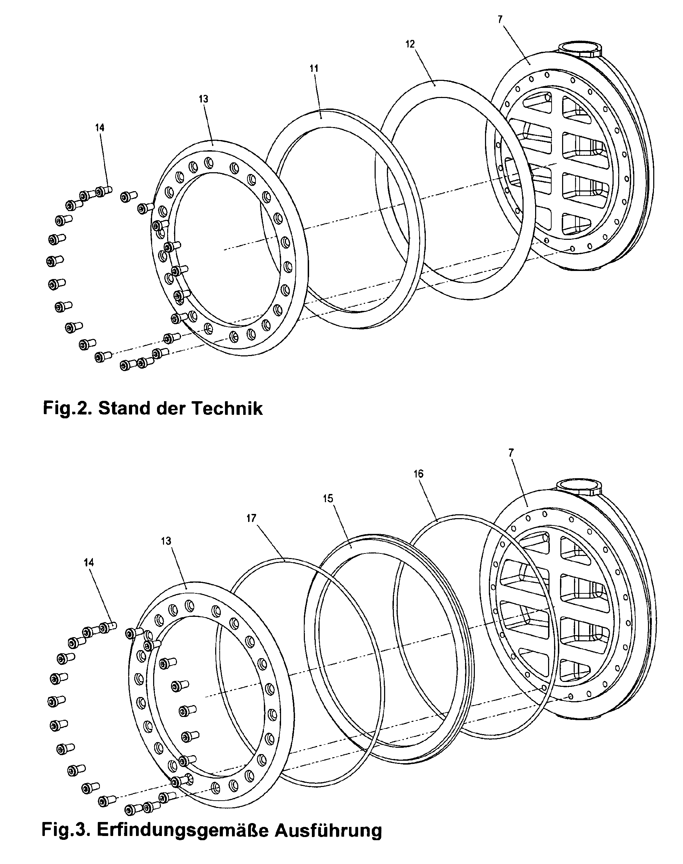

**Fig.2** Zeigt schematisch die Scheibe **7** und deren Dichtungen **11** und **12** in einer nach dem Stand der Technik dreifach, bzw. vierfach asymmetrisch aufgebauten Absperrklappe:
- Die Lamellendichtung **11** wird auf der Scheibe **7** montiert
- Zwischen der Lamellendichtung **11** und der Scheibe **7** liegt die Abschlußdichtung **12.** Meist handelt es sich hierbei um eine Graphit - Flachdichtung oder um eine Kammprofildichtung aus Graphit und Edelstahl.
- Die Lamellendichtung **11** und die Abschlußdichtung **12** wird mit Hilfe des Klemmringes **13** und der Klemmringschrauben **14** an die Scheibe **7** gepreßt.

Die Beanspruchung der Lamellendichtung **11** resultiert aus insgesamt vier Anteilen:
a) Der in der Rohrleitung **5** vorherrschende Druck stellt den kleinsten Anteil der Belastung dar, die auf die Lamellendichtung **11** ausgeübt wird
b) In der geschlossenen Stellung der Armatur wird die gesamte Klappenscheibe **7** mit dem vollen Differenzdruck beaufschlagt. Diese Belastung wird auf die Lamellendichtung **11** übertragen. Diese in Rohrleitungsrichtung aus der Druckdifferenz vor und hinter der Armatur resultierenden und auf die Klappenscheibe **7** wirkenden Kräfte werden nur zu einem geringen Teil von der, die Scheibe **7** im Gehäuse fixierenden, Welle aufgefangen.
c) Aus der Asymmetrie **2** und dem Differenzdruck vor und hinter der Klappenscheibe **7** resultiert ein Drehmoment, das entgegen des Öffnens der Klappenscheibe wirkt und welches die Lamellendichtung **11** in den Sitz preßt.
d) Das Drehmoment, das nötig ist, um die Klappenscheibe **7** zu öffnen, bzw. zu schließen, muß groß genug sein um die aus dem Differenzdruck resultierenden Kräfte zu überwinden. Zusätzlich muß über das Drehmoment die Kraft aufgebracht werden, um die Lamellendichtung **11** in die Dichtfläche **18** einzupressen. Das Drehmoment muß so groß ausgelegt sein, daß es die Armatur auch dann einwandfrei öffnen und dichtschließen läßt, wenn der volle Differenzdruck anliegt. Das Drehmoment muß also so ausgelegt sein, daß die unter a) b) und c) aufgeführten Belastungen zuzüglich einer gewissen Sicherheit überwunden werden können. Üblicherweise ist nach dem Stand der Technik das Drehmoment des meist pneumatischen Antriebes in Schließ- und Öffnungsrichtung identisch. Nach dem Stand der Technik stellt die Lamellendichtung **11** gleichzeitig den Endanschlag der Klappenscheibe **7** dar und muß auch das Drehmoment des Antriebes auffangen.

Entgegen einer üblichen Dichtung, wie z.B. einem Elastomer-O-Ring, der nur die Kräfte aufnehmen muß, die aus dem in dem abzudichtenden Bauteil herrschenden

Druck resultieren, muß eine nach dem Stand der Technik ausgeführte Lamellendichtung **11** wesentlich höheren Beanspruchungen standhalten resultierend aus den folgenden Belastungen:
- der auf die Lamellendichtung **11** wirkende Druck
- die auf die Klappenscheibe **7** wirkenden und aus dem Differenzdruck resultierenden Kräfte, die nicht von der Welle aufgenommen werden
- die auf die asymmetrisch ausgeführte Klappenscheibe **7** wirkenden und aus dem Differenzdruck resultierenden Kräfte, die auf die Klappenscheibe **7** in Schließrichtung wirken
- das Drehmoment des Antriebes

Der Konstrukteur muß dabei einen Kompromiss eingehen: einerseits sollte die Lamellendichtung **11** möglichst flexibel sein, um sich an die Dichtungsfläche **18** im Gehäuse möglichst gut anpassen zu können, andererseits sollte die Lamellendichtung **11** möglichst steif sein, um widerstandsfähig zu sein gegen die hohen Drücke (üblicherweise bis zu 200bar) in der Armatur, die auch in großen Nennweiten hergestellt wird (üblicherweise bis zu DN2000). Ebenso muß die Lamellendichtung **11** nach dem Stand der Technik das Drehmoment des Antriebes auffangen (üblicherweise bis zu mehreren hunderttausend Nm). Nach dem Stand der Technik ist das aufzufangende Drehmoment des Antriebes der Anteil, der die größte Rolle für die Auslegung der Steifigkeit der Lamellendichtung **11** spielt.

Gerade bei hohen Drücken muß dabei in Kauf genommen werden, daß die dafür notwendige, steife und unflexible Lamellendichtung **11** zumindest kleine Leckagen hervorruft. Außerdem ist es von Nachteil, daß die Lamellendichtung **11** um so empfindlicher gegen Fremdpartikel wird, je steifer sie aufgebaut ist. Die nach dem Stand der Technik ausgeführten und mit steigendem Druck immer steiferen Lamellendichtungen **11** machen es nicht möglich, dreifach bzw. vierfach exzentrische Armaturen zu bauen, die bei Drücken, die 60bar überschreiten, noch dicht sind.

Es besteht daher Bedarf nach einer Absperrklappe, die alle Vorteile der dreifach oder vierfach asymmetrischen Absperrklappen beinhaltet, aber zusätzlich mit einer sehr flexiblen Dichtung ausgerüstet werden kann.

Die zuvor genannten Nachteile werden mit einer erfindungsgemäßen Lösung eliminiert und erlauben eine Konstruktion, bei der sehr flexible dynamische Dichtungen verwendet werden können.

**Fig.3** Zeigt schematisch die Scheibe **7** und deren Dichtungen **16, 17** in einer erfindungsgemäß dreifach, asymmetrisch aufgebauten Absperrklappe:
- Der Dichtungsträger **15** besteht aus einem massiven steifen Werkstoff, vorzugsweise Edelstahl und ist so ausgelegt, daß er die in der Klappe herrschenden Drücke vollständig, aufnehmen kann, ohne daß die Belastung des Dichtungsträgerwerkstoffes über Rp0,2 hinausgeht. Die Nut für die Dichtung sollte über den ganzen Umfang möglichst gleichmäßig in ihren Abmessungen sein. Üblicherweise würde man den Dichtungsträger auf einer 5-Achs Maschine herstellen.
- Zwischen dem Dichtungsträger **15** und der Scheibe **7** liegt die Dichtung **16.** Dies kann eine Flachdichtung, eine Kammprofildichtung, oder ein einfacher O-Ring oder ein Metall - O-Ring sein. Der Dichtungsträger **15** kann ebenfalls integraler Bestandteil der Scheibe **7** sein. In dem Fall entfällt die Dichtung **16.**
- Im Dichtungsträger **15** befindet sich eine Nut, bzw. ein Rücksprung, in den eine Dichtung **17** eingelegt wird. Erfindungsgemäß handelt es sich hier um eine möglichst flexible Dichtung, die lediglich die Abdichtungsfunktion übernimmt, aber keine Druckkräfte. Diese Dichtung kann ein einfacher, massiver O-Ring aus Elastomer, aus PTFE, oder Metall sein. Es kommen aber auch andere Dichtungsformen in Frage wie Lippenringe, oder z.B. hohle Metallringe, evtl. mit Federvorspannung.
- Der Dichtungsträger **15,** und die Dichtungen **16** und **17** werden mit Hilfe des Klemmringes **13** und der Klemmringschrauben **14** an die Scheibe **7** gepreßt.

Die Erfindung ist analog auch auf eine vierfach asymmetrisch aufgebaute Klappe übertragbar.
Ebenso kann man die erfindungsgemäße Konstruktion auf dreifach oder vierfach exzentrisch aufgebaute Klappen übertragen, bei denen die Klappenscheibe über eine feste Dichtfläche verfügt und bei denen die dynamische Dichtung im Gehäuse eingebaut ist.

### Bezugszeichenliste

- **1**: Asymmetrie 1
- **2**: Asymmetrie 2
- **3**: Asymmetrie 3
- **4**: Asymmetrie 4
- **5**: Rohrleitung
- **6**: Klappenscheibendrehmitte
- **7**: Klappenscheibe
- **8**: Rohrleitungsachse
- **9**: Symmetrieachse der Dichtungsfläche
- **10**: Mantelkörper der Dichtungsfläche
- **11**: Lamellendichtung
- **12**: Abschlußdichtung
- **13**: Klemmring
- **14**: Klemmringschrauben
- **15**: Dichtungsträger
- **16**: Abdichtung
- **17**: Dichtung
- **18**: Dichtungsfläche

## Patentansprüche

1. Dreifach oder vierfach asymmetrisch aufgebaute Absperrklappe zur steuerbaren Fluiddurchströmung, **dadurch gekennzeichnet, daß** in ihrem Gehäuse **1** oder ihrer Klappenscheibe **7** zur dynamischen Fluidabdichtung eine Nut ausgebildet ist, in der mindestens eine korrespondierende O-Ringdichtung oder Lippendichtung angeordnet ist.

2. Absperrklappe nach Anspruch **1 dadurch gekennzeichnet, dass** auf die Klappenscheibe **7** ein Dichtungsträger **15** montiert wird, der eine Nut, oder einen Rücksprung aufweist, in die mindestens eine korrespondierende, Dichtung **17** eingebaut wird

3. Absperrklappe nach einem oder mehreren der Ansprüche 1-2 **dadurch gekennzeichnet, dass** in das Gehäuse **1** ein Dichtungsträger montiert wird, der eine Nut, oder einen Rücksprung aufweist, in die mindestens eine korrespondierende Dichtung eingebaut wird

4. Absperrklappe nach einem oder mehreren der Ansprüche 1-3, **dadurch gekennzeichnet, dass** die Dichtung **17** als ein O-Ring oder Lippenring aus flexiblem Material ausgeführt wird.

5. Absperrklappe nach einem oder mehreren der Ansprüche 1-4, **dadurch gekennzeichnet, dass** die Dichtung **16** als ein O-Ring oder Lippenring aus flexiblem Material ausgeführt wird.

6. Absperrklappe nach einem oder mehreren der Ansprüche 1-5, **dadurch gekennzeichnet, dass** die Dichtung **17** als ein hohler Metallring mit rundem oder C-förmigem Querschnitt, ausgeführt wird.

7. Absperrklappe nach einem oder mehreren der Ansprüche 1-6, **dadurch gekennzeichnet, dass** die Dichtung **16** als ein hohler Metallring mit rundem oder C-förmigen Querschnitt, ausgeführt wird.

8. Absperrklappe nach einem oder mehreren der Ansprüche 1-7, **dadurch gekennzeichnet, dass** die Dichtung **17** als ein hohler Metallring mit rundem oder C-förmigem Querschnitt, mit innenliegender Feder ausgeführt wird.

9. Absperrklappe nach einem oder mehreren der Ansprüche 1-8, **dadurch gekennzeichnet, dass** die Dichtung **16** als ein hohler Metallring mit rundem oder C-förmigen Querschnitt, mit innenliegender Feder ausgeführt wird.
